# FASCICULE DE BREVET EUROPEEN

(11) **EP 1 344 476 B1**
(45) Date de publication et mention de la délivrance du brevet: **12.06.2013**
(21) Numéro de dépôt: 03356041.8
(22) Date de dépôt: 10.03.2003
(51) Int. Cl.: A47J 27/08

(54) **Appareil de cuisson d'aliments sous pression a dispositif de commande de verrouillage/deverrouillage rotatif**
Dampfdruckkochgerät mit einer drehenden Verriegelungsvorrichtung
Apparatus for cooking food under pressure with a rotative locking device

(30) Priorité: 08.03.2002 FR 0203091
(43) Date de publication de la demande: 17.09.2003
(73) Titulaire: SEB S.A., 69132 Ecully Cedex (FR)
(72) Inventeur: Cartigny, Michel Pierre, 21310 Mirebeau sur Beze (FR); Chameroy, Eric, 21260 Veronnes (FR)
(74) Mandataire: Martin, Didier Roland Valéry

(56) Documents cités:
- EP-A- 1 044 642
- WO-A-96/01069
- US-B1- 6 257 124

## Description

La présente invention se rapporte au domaine technique général des appareils de cuisson domestiques sous pression comprenant une cuve et un couvercle destiné à être verrouillé sur la cuve pour former une enceinte de cuisson étanche, lesdits appareils étant destinés à assurer la cuisson sous pression de vapeur des aliments contenus dans la cuve.

La présente invention concerne un appareil de cuisson d'aliments sous pression, du genre autocuiseur, comportant au moins :
- une cuve et un couvercle destiné à être rapporté et verrouillé sur ladite cuve pour former une enceinte de cuisson étanche,
- une ou plusieurs mâchoire(s) montée(s) mobile(s) en translation par un moyen d'entraînement, entre une position de verrouillage du couvercle relativement à la cuve et une position de déverrouillage,
- un dispositif de commande du mouvement de la au moins une mâchoire.

La présente invention concerne également un dispositif de commande du mouvement de la au moins une mâchoire permettant une réduction de l'effort exercé par l'utilisateur.

On connaît déjà un récipient de cuisson sous pression comprenant une cuve et un couvercle, ledit couvercle comportant des mâchoires montées mobiles radialement, ainsi qu'un dispositif de commande du mouvement des mâchoires entre une position de verrouillage du couvercle relativement à la cuve et une position de déverrouillage. Le dispositif de commande comprend une poignée rotative dont l'axe de rotation est confondu avec l'axe de symétrie général de l'autocuiseur, ladite poignée coopérant directement avec un système de biellettes pour transformer le mouvement rotatif de la poignée en un mouvement centrifuge ou centripète des mâchoires. Il s'avère que le dispositif de commande du mouvement des mâchoires mis en oeuvre par le dispositif de l'art antérieur procure une sécurité d'utilisation ainsi qu'une ergonomie insuffisantes. En effet, le recours à une poignée rotative constitue une gêne sur le plan ergonomique pouvant entraîner des risques en matière de sécurité. Ainsi, on peut tout d'abord noter que les gestes à mettre en oeuvre correspondant d'une part à l'ouverture des mâchoires et d'autre part à la fermeture des mâchoires sont très similaires puisqu'ils consistent dans chaque cas à tourner une même poignée. La différence de sens de rotation n'est généralement pas suffisante pour permettre à l'utilisateur de mémoriser, de manière naturelle et instinctive, quel geste correspond à quel résultat technique (fermeture - ouverture). Dans le cas présent, la distinction est d'autant plus difficile à établir que les mâchoires sont masquées par un carter, de sorte que l'utilisateur ne peut visualiser le résultat de son action sur la poignée rotative.

De surcroît, l'utilisateur est obligé d'utiliser ses deux mains pour manipuler la poignée rotative de commande : une main est nécessaire à la manipulation de la poignée elle-même, tandis que l'autre main est requise pour bloquer le reste de l'appareil afin d'éviter sa rotation lors de l'action sur la poignée.

Cette gestuelle de commande est donc relativement contraignante, et présente le risque de voir l'utilisateur poser sa main sur une partie brûlante de l'appareil.

Il y a également lieu de noter que la mécanique de commande proposée ainsi que les déplacements relatifs des pièces constitutives du dispositif de commande nécessitent de la part de l'utilisateur un effort de commande relativement important, qui là encore, va à l'encontre de la sécurité d'utilisation, puisque cet effort important à exercer sur la poignée rotative augmente les risques de voir échapper l'ensemble de l'autocuiseur des mains de l'utilisateur, ce qui peut s'avérer particulièrement dangereux lorsque le récipient est chaud.

Enfin, l'appareil de l'art antérieur est d'une conception relativement complexe, mettant en jeu de nombreuses pièces mobiles, ce qui conduit à des risques d'usure et de grippage importants, ainsi qu'à des coûts de fabrication élevés, pour une fiabilité de fonctionnement non optimale.

Un appareil de l'art antérieur est décrit dans US 6 257 124.

L'objet de la présente invention vise en conséquence à porter remède aux divers inconvénients énumérés précédemment et à proposer un nouvel appareil de cuisson d'aliments sous pression dont le dispositif de commande du mouvement des mâchoires autorise une gestuelle de commande différenciant nettement les opérations de fermeture et d'ouverture, et autorisant une réduction de l'effort à mettre en oeuvre par l'utilisateur pour le verrouillage / déverrouillage de l'appareil, ainsi qu'une meilleure compacité de l'appareil de cuisson.

Un autre objet de l'invention vise à proposer un nouvel appareil de cuisson dont l'ergonomie générale, et notamment celle de son dispositif de commande du mouvement des mâchoires, est améliorée.

Un autre objet de l'invention vise à proposer un appareil de cuisson dont la conception est simplifiée et dont le montage est facilité.

Les objets assignés à l'invention sont atteints à l'aide d'un appareil de cuisson d'aliments sous pression comportant au moins :
- une cuve et un couvercle destiné à être rapporté et verrouillé sur ladite cuve pour former une enceinte de cuisson étanche,
- une ou plusieurs mâchoire(s) montée(s) mobile(s) en translation par un moyen d'entraînement correspondant, entre une position de verrouillage du couvercle relativement à la cuve et une position de déverrouillage,
- un dispositif de commande du mouvement de la au moins une mâchoire, comprenant :
   - une pièce intermédiaire, laquelle comprend au moins un moyen de manoeuvre et un moyen d'embrayage, et est montée en rotation libre relativement au moyen d'entraînement pour que le moyen de manoeuvre coopère avec ledit moyen d'entraînement de façon à régir le déplacement de ce dernier,
   - un organe de commande principal comprenant au moins un moyen de transmission, ledit organe de commande principal étant positionné relativement à la pièce intermédiaire pour que le moyen de transmission coopère avec le moyen d'embrayage, de façon à régir la rotation de la pièce intermédiaire lorsque l'organe de commande principal est actionné,
   caractérisé en ce que l'organe de commande principal est monté mobile en translation relativement au couvercle.

D'autres particularités et avantages de l'invention apparaîtront et ressortiront plus en détail à la lecture de la description faite ci-après, en référence aux dessins annexés, donnés à titre d'exemple illustratif et non limitatif dans lesquels :

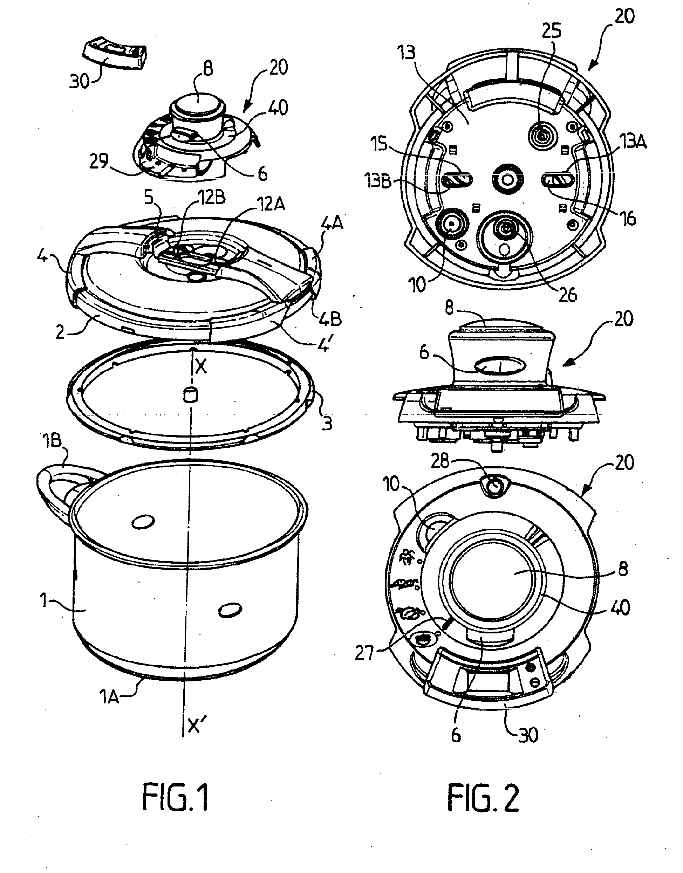

- La figure 1 illustre, selon une vue éclatée en perspective générale, les différents éléments constituant un autocuiseur conforme à l'invention.
- La figure 2 illustre un module destiné à être rapporté et fixé de façon amovible sur le couvercle d'un autocuiseur conforme à l'invention, selon une vue (de haut en bas) de dessous, de côté et de dessus.
- La figure 3 illustre, selon une vue partielle schématique en perspective, un détail de réalisation du dispositif de commande du verrouillage / déverrouillage du couvercle d'un autocuiseur conforme à l'invention.
- La figure 4 montre une variante de réalisation du moyen d'embrayage d'un dispositif de commande du mouvement des mâchoires d'un autocuiseur conforme à l'invention.
- La figure 5 montre un détail d'une variante de réalisation d'un dispositif de commande du mouvement des mâchoires d'un autocuiseur conforme à l'invention.
- La figure 6 montre une deuxième variante de réalisation du moyen d'embrayage d'un dispositif de commande du mouvement des mâchoires d'un autocuiseur conforme à l'invention.
- La figure 7 est un schéma de principe d'un détail de réalisation du dispositif de commande du mouvement des mâchoires d'un autocuiseur conforme à l'invention.
- La figure 8 illustre, selon une vue en perspective, le couvercle d'un autocuiseur conforme à l'invention.
- La figure 9 illustre, selon une vue de dessus, un détail de réalisation d'une variante préférentielle de dispositif de commande du verrouillage / déverrouillage du couvercle d'un autocuiseur conforme à l'invention.

L'appareil de cuisson conforme à l'invention est destiné à assurer la cuisson de différents aliments, sous pression, dans un contexte domestique.

L'appareil de cuisson comprend une cuve 1 de forme sensiblement cylindrique d'axe de symétrie (et de révolution) X-X', sur laquelle un couvercle 2 est destiné à être rapporté de manière étanche.

Par la suite, l'adjectif « *axial* » se référera à la direction de cet axe de symétrie, qui s'apparente à la direction verticale lorsque l'autocuiseur est en fonctionnement normal.

La cuve 1 est de manière classique réalisée à partir d'un matériau métallique tel que l'acier inoxydable et pourvu d'un fond thermo-conducteur 1A solidaire de la cuve 1 par exemple par frappe à chaud.

La cuve 1 comporte également des organes de préhension tels que des poignées 1 B fixées sur les parois de la cuve 1.

Le couvercle 2 est de forme générale discoïde, et est verrouillé sur la cuve 1 grâce à au moins une mâchoire 4 montée mobile entre une position de verrouillage, dans laquelle le couvercle est solidarisé à la cuve, et une position de déverrouillage, dans laquelle le couvercle peut être retiré de la cuve.

La mâchoire 4 se présente de manière classique sous la forme de segments de profils en U adaptés à la forme du récipient, et dans le cas montré aux figures, sous la forme d'arcs de cercles, éventuellement échancrés, de longueur déterminée.

La mâchoire 4 comporte un rebord inférieur 4B et un rebord supérieur 4A permettant d'enserrer respectivement le rebord périphérique de la cuve 1 et le rebord périphérique du couvercle 2.

L'appareil de cuisson sous pression conforme à l'invention comme définie dans la revendication 1 comporte au moins :
- une cuve 1 et un couvercle 2 destiné à être rapporté sur la cuve 1 pour former une enceinte de cuisson étanche,
- une ou plusieurs mâchoire(s) 4 montée(s) mobile(s) en translation par un moyen d'entraînement 5 correspondant, entre une position de verrouillage du couvercle 2 relativement à la cuve 1 et une position de déverrouillage,
- un dispositif de commande du mouvement de la au moins une mâchoire(s) 4.

L'étanchéité de l'enceinte de cuisson est obtenue par verrouillage du couvercle 2 sur la cuve 1, le couvercle 2 étant doté d'un moyen d'étanchéité, constitué par exemple d'un joint d'étanchéité annulaire à lèvres 3.

Selon l'invention, le dispositif de commande du mouvement de la au moins une mâchoire 4 comprend une pièce intermédiaire 7, laquelle comprend au moins un moyen de manoeuvre 7A, 7B et un moyen d'embrayage 7C, 19, qui seront décrits plus en détail ultérieurement. La pièce intermédiaire 7 est montée en rotation libre relativement au moyen d'entraînement 5, pour que le moyen de manoeuvre 7A, 7B coopère avec ledit moyen d'entraînement 5, de façon à régir le déplacement de ce dernier.

La rotation de la pièce intermédiaire 7 s'effectue dans un plan sensiblement horizontal, autour d'un axe de rotation sensiblement parallèle, voire confondu à l'axe de symétrie X-X' de l'appareil de cuisson.

Selon l'invention, le dispositif de commande du mouvement de la au moins une mâchoire 4 comprend également un organe de commande principal 6. L'organe de commande principal 6 comprend au moins un moyen de transmission 6C, 18, 30, 31 qui sera décrit plus en détail ultérieurement. L'organe de commande principal 6 est positionné relativement à la pièce intermédiaire 7 pour que le moyen de transmission 6C, 18, 30, 31 coopère avec le moyen d'embrayage 7C, 19, de façon à régir la rotation de la pièce intermédiaire 7, lorsque l'organe de commande principal 6 est actionné par l'utilisateur.

Ainsi, conformément à l'invention, l'organe de commande principal ne coopère pas directement avec la pièce intermédiaire, mais indirectement, par l'intermédiaire d'un système de type embrayage, mis en oeuvre par le moyen de transmission et le moyen d'embrayage.

Selon une caractéristique essentielle de l'invention, l'organe de commande principal est monté mobile en translation relativement au couvercle 2.

Un tel mouvement de translation correspond à une liaison mécanique de type glissière.

Le principe général de l'invention repose donc sur :
- la transformation d'un mouvement de translation, qui s'avère particulièrement ergonomique à générer pour un utilisateur, en un mouvement intermédiaire de rotation, qui se prête particulièrement bien à différentes opérations de contrôle et de réduction d'effort,
- et sur la transformation de ce mouvement de rotation en un mouvement de translation, qu'il reste à communiquer à la au moins une mâchoire 4.

Avantageusement, la au moins une mâchoire 4 est montée mobile selon une direction sensiblement radiale, par rapport à l'axe général de symétrie X-X' de l'appareil de cuisson.

Avantageusement, l'organe de commande principal 6 est monté mobile également selon une direction sensiblement radiale.

Avantageusement, l'organe de commande principal 6 régit la rotation de la pièce intermédiaire 7 de manière active dans le sens du verrouillage et dans le sens du déverrouillage. L'organe de commande principal 6 présente donc un caractère réversible, et peut être actionné par exemple par poussage et tirage. Le sens du verrouillage correspond, tel que cela est illustré aux figures, à une rotation de la pièce intermédiaire 7 dans le sens anti-horaire et à un déplacement centripète concomitant du moyen d'entraînement 5 et donc de la au moins une mâchoire 4, tandis que le sens du déverrouillage correspond à une rotation de la pièce intermédiaire dans le sens horaire et à un déplacement concomitant centrifuge du moyen d'entraînement 5 et donc de la au moins une mâchoire 4.

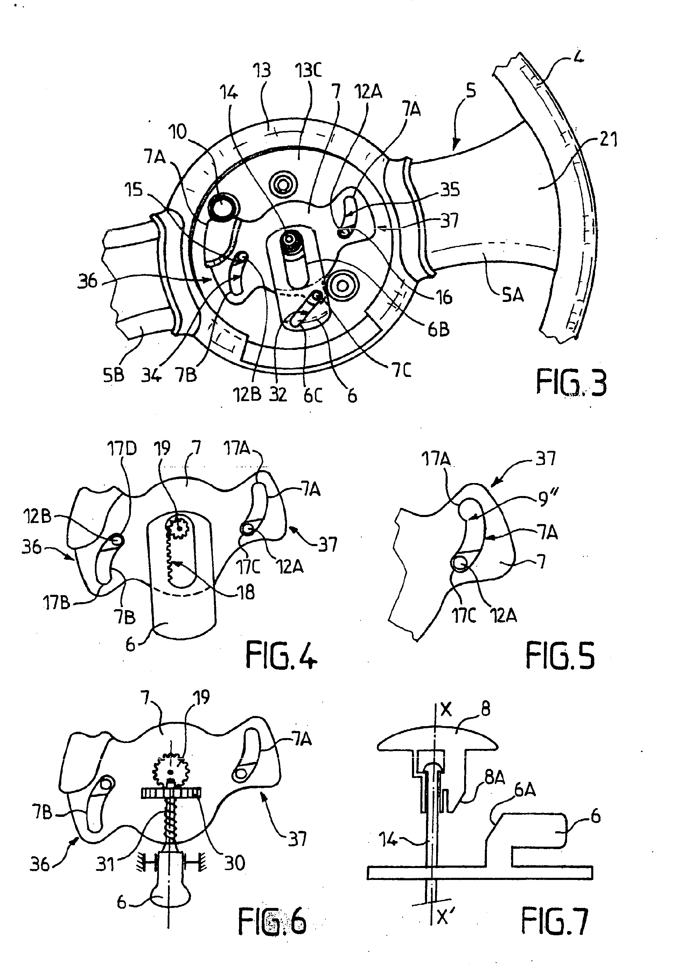

Selon une première variante de réalisation d'un autocuiseur conforme à l'invention, le moyen d'embrayage est constitué par une roue dentée 19 montée axialement fixe sur la pièce intermédiaire 7. L'axe de rotation de la roue dentée 19 est confondu avec l'axe de rotation de la pièce intermédiaire 7, lequel axe est confondu de préférence avec l'axe de symétrie X-X' de l'autocuiseur. Avantageusement, le moyen de transmission est constitué, tel que cela est représenté à la figure 4, par une crémaillère 18 agencée sur l'organe de commande principal 6 pour engrener latéralement avec la roue dentée 19. La crémaillère 19 est montée fixe sur l'organe de commande principal 6, de sorte que lorsque ce dernier se déplace en translation, la crémaillère 18 effectue également un mouvement de translation qui conduit à mettre en rotation la roue dentée 19, et donc la pièce intermédiaire 7.

Selon une variante de réalisation de l'invention, le moyen de transmission est constitué d'une vis sans fin 31 montée fixe sur l'organe principal de commande 6 et s'étendant dans la direction de translation de ce dernier, ainsi que d'un pignon 30 monté fixe par rapport au couvercle 2 et engrenant perpendiculairement avec la roue dentée 19. Le pignon 30 comprend en son centre un trou taraudé, coopérant avec la vis sans fin 31 pour qu'un mouvement de translation de celle-ci provoque, par l'intermédiaire du trou taraudé, la rotation du pignon 30, lequel à son tour met en rotation la roue dentée 19, et donc la pièce intermédiaire 7.

Il est également envisageable que les moyens de transmission et d'embrayage soient formés par une biellette ( non représentée) reliant la pièce intermédiaire 7 et l'organe de commande principal 6.

Selon une variante de réalisation préférée de l'invention, le moyen d'embrayage est constitué par un pion de guidage 7C, solidaire de la pièce intermédiaire 7 et s'étendant axialement à partir de celle-ci.

De façon préférentielle, le pion de guidage 7C est de forme sensiblement cylindrique, et son extrémité supérieure est chanfreinée.

Avantageusement, le moyen de transmission comprend au moins une surface plane 32 s'étendant en oblique par rapport à la direction radiale, et agencée de façon à ce qu'une translation de l'organe de commande principal 6 induise l'engagement du pion de guidage 7C par la surface plane 32, laquelle pousse le pion de guidage 7C, ce qui engendre la rotation de la pièce intermédiaire 7. La surface plane fait ainsi fonction de rampe et engage le pion de guidage 7C, dont le rôle peut être assimilé à celui d'une baïonnette. Le pion de guidage 7C, sous l'effet de l'effort qui lui est transmis par la surface plane 32, va glisser contre celle-ci et engendrer ainsi un mouvement de rotation de la pièce intermédiaire 7.

Selon une version particulièrement avantageuse de l'invention, le moyen de transmission est constitué par un orifice oblong d'entraînement 6C s'étendant en oblique par rapport à la direction radiale, et coopérant avec le pion de guidage 7C, de façon à ce qu'une translation de l'organe de commande 6 induise une rotation de la pièce intermédiaire 7. L'orifice oblong d'entraînement 6C est pratiqué dans l'épaisseur de la pièce intermédiaire 7, et sa largeur est adaptée à la section du pion de guidage 7C. La mise en oeuvre d'un tel orifice oblong d'entraînement permet de conférer un caractère réversible à l'organe de commande 6.

Avantageusement, la pièce intermédiaire 7 est montée à rotation élastique relativement au couvercle 2, de telle sorte que sa position de rappel élastique correspond au verrouillage de la au moins une mâchoire 4.

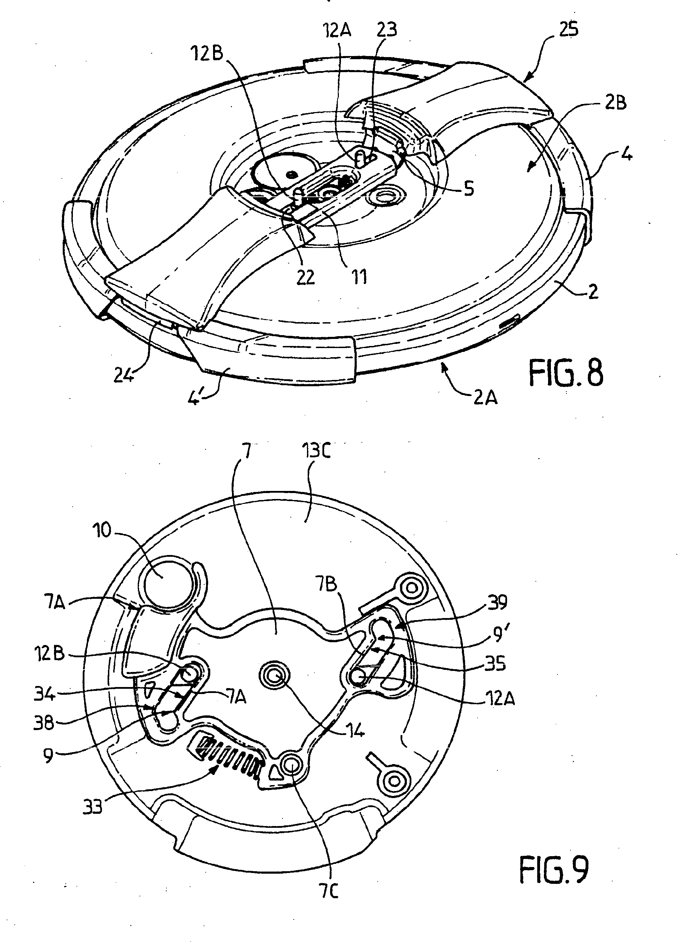

De façon préférentielle, la pièce intermédiaire 7 est montée à rotation élastique à l'encontre d'un ressort de compression 33, tel que cela est représenté à la figure 9. L'une des extrémités du ressort de compression 33 est ainsi solidaire, directement ou indirectement, du couvercle 2, tandis que son autre extrémité vient engager la pièce intermédiaire 7, et exercer ainsi une force sensiblement tangentielle en périphérie de ladite pièce intermédiaire 7, de façon à maintenir celle-ci dans la position correspondant au verrouillage de la au moins une mâchoire 4.

Selon une autre variante de réalisation, la pièce intermédiaire 7 est montée à rotation élastique à l'encontre d'un ressort de torsion (non représenté). Le montage élastique de la pièce intermédiaire 7 peut bien évidemment être effectué par tout autre moyen élastique bien connu de l'homme du métier, sans pour autant sortir du cadre de l'invention.

Avantageusement, le moyen d'entraînement 5 comprend au moins un bras entraîneur 5A, 5B apparié à la au moins une mâchoire 4, 4', guidé en translation relativement au couvercle 2, et présentant une extrémité externe 24, 25 reliée à la au moins une mâchoire respective 4, 4' et une extrémité interne 22, 23 destinée à coopérer avec le moyen de manoeuvre 7A, 7B.

Selon une variante préférentielle de réalisation de l'invention, les mâchoires 4, 4' sont au nombre de deux et sont montées, de préférence en opposition, sur le couvercle 2 par deux bras entraîneurs 5A, 5B respectifs. De façon préférentielle, chaque bras entraîneur 5A, 5B, se présente sous la forme d'un profilé métallique, par exemple rectiligne, sensiblement plat, et dont le profil est adapté à celui du couvercle 2. Les bras entraîneurs 5A, 5B peuvent présenter une longueur suffisante, de manière à pouvoir être superposés, au moins en partie, lors de leur déplacement en translation. Dans ce cas, les bras entraîneurs 5A, 5B sont autoguidés en translation l'un dans l'autre, un premier bras 5A formant le bras mâle, l'autre bras 5B formant le bras femelle, le bras mâle 5A coulissant dans le bras femelle 5B.

De manière préférentielle, le guidage du mouvement linéaire et en translation des bras entraîneurs 5A, 5B est assuré par des moyens de guidage supplémentaires qui sont solidaires du couvercle 2.

Selon une variante préférentielle, les moyens de guidage supplémentaires comprennent une pièce de support 11, qui enserre les bras entraîneurs 5A, 5B sur une partie de leur longueur. De façon encore plus préférentielle, la pièce de support 11 est formée d'une plaque de section transversale en U, enserrant et recouvrant les bras entraîneurs 5A, 5B, la face interne de l'âme du U étant tournée vers le couvercle 2.

Dans ce cas, il n'est pas nécessaire que les bras entraîneurs 5A, 5B se superposent ou entrent en contact.

De façon préférentielle, les moyens de guidage supplémentaires comprennent également des axes de guidage (non visibles aux figures), appariés aux bras d'entraînement 5A, 5B, et qui s'étendent axialement sensiblement à la périphérie du couvercle 2 et sont fixés solidairement à celui-ci.

Ces axes de guidage coopèrent avec des moyens formant chemins de guidage correspondants, lesquels sont solidaires des bras entraîneurs 5A, 5B et/ou des mâchoires 4, 4', de façon à former une liaison glissière radiale entre le couvercle 2 et les bras entraîneurs 5A, 5B et mâchoires 4, 4'.

De façon avantageuse, les axes de guidage sont constitués d'ergots cylindriques, dont l'une des extrémités est sertie sur le couvercle 2, l'extrémité opposée étant filetée.

Les moyens formant chemins de guidage sont quant à eux avantageusement constitués par des trous oblongs respectifs ménagés longitudinalement dans l'épaisseur des extrémités externes 24, 25 des bras entraîneurs 5A, 5B et dans l'épaisseur des mâchoires 4, 4'.

Les axes de guidage sont ainsi positionnés dans les trous oblongs respectifs, des écrous étant serrés sur les extrémités filetées desdits axes de guidage, pour éviter le désengagement de ces derniers hors des trous oblongs formant chemins de guidage. La longueur des trous oblongs est évidemment adaptée à la course que doivent effectuer les bras entraîneurs 5A, 5B entre les positions d'ouverture et de fermeture des mâchoires 4, 4'.

Avantageusement, l'extrémité interne 22, 23 de chaque bras entraîneur 5A, 5B est pourvue d'un ergot axial de guidage respectif 12A, 12B.

De façon préférentielle, les ergots de guidage 12A, 12B sont constitués de plots cylindriques verticaux dont l'extrémité supérieure est chanfreinée. Ils s'étendent sensiblement verticalement vers l'extérieur du récipient de cuisson et sont situés aux extrémités des bras entraîneurs 5A, 5B les plus proches du centre du couvercle 2, c'est-à-dire respectivement aux extrémités internes 22, 23 situées à l'opposé des mâchoires 4, 4'.

Selon une première variante de réalisation de l'invention, le moyen de manoeuvre comprend au moins une surface formant rampe 34, 35 s'étendant en oblique par rapport à la direction radiale, et étant agencée de façon à ce que lorsque la pièce intermédiaire 7 tourne, la surface formant rampe 34, 35 engage l'ergot axial de guidage correspondant 12A, 12B et le pousse, ce qui engendre le mouvement du moyen d'entraînement 5A, 5B.

La au moins une surface formant rampe 34, 35 peut être de forme plane ou courbe.

Elle interagit avec l'ergot axial de guidage 12A, 12B, avec lequel elle est appariée, à la façon d'une rampe avec une baïonnette. La direction radiale par rapport à laquelle la au moins une surface formant rampe s'étend en oblique correspond à celle de la ligne passant par l'axe de rotation de la pièce intermédiaire 7 et par l'ergot axial de guidage. Les bras entraîneurs 5A, 5B étant guidés en translation, l'ergot axial de guidage 12A, 12B est également de ce fait guidé en translation, de sorte que sous la poussée exercée par la surface formant rampe 34, 35, l'ergot axial de guidage 12A, 12B glisse le long de cette surface selon une trajectoire correspondant à cette direction de mobilité en translation.

Selon une version préférentielle de réalisation de l'invention, le moyen de manoeuvre comprend au moins une lumière oblongue de manoeuvre 7A, 7B agencée dans l'épaisseur de la pièce intermédiaire 7, pour engager l'ergot axial de guidage 12A, 12B correspondant, de façon à ce qu'une rotation de la pièce intermédiaire 7 engendre le mouvement du moyen d'entraînement 5A, 5B.

Dans le cas préférentiel où les mâchoires 4, 4' sont au nombre de deux et sont montées par deux bras entraîneurs 5A, 5B respectifs, la pièce intermédiaire 7, tel que cela est représenté aux figures 3 à 6, est pourvue de deux lumières oblongues de manoeuvre 7A, 7B disposées symétriquement par rapport à l'axe de rotation de la pièce intermédiaire 7 et s'étendant respectivement entre deux extrémités 17A, 17C et 17B, 17D (voir figure 4). Selon une première variante de réalisation, lesdites lumières oblongues de manoeuvre 7A, 7B peuvent présenter une forme courbe sensiblement en arc de cercle dont le centre de courbure est décalé par rapport au point de pivotement de la pièce intermédiaire 7, de sorte que l'une des extrémités 17C, 17D de chaque lumière de manoeuvre 7A, 7B est décalée vers le centre (vers l'intérieur) de la pièce intermédiaire 7 par rapport à l'autre extrémité 17A, 17B. Dans le cas illustré à la figure 3, le centre ou point de pivotement de la pièce intermédiaire 7 est situé sur l'axe X-X' du récipient.

De façon préférentielle, tel que cela est représenté aux figures, la pièce intermédiaire 7 est une plaque formant volant, qui comporte des oreilles 36, 37 appariées au nombre de mâchoires, et dans lesquelles sont pratiquées les lumières oblongues de manoeuvre 7A, 7B.

Selon un mode de réalisation préféré de l'invention illustré à la figure 9, les lumières oblongues de manoeuvre 7A, 7B comprennent chacune une partie sensiblement rectiligne s'étendant en oblique par rapport à la direction radiale, ladite partie rectiligne formant à l'une de ses extrémités un coude 38, 39 rentrant vers l'intérieur de la plaque 7, c'est-à-dire vers l'axe de rotation de celle-ci.

Les lumières oblongues de manoeuvre 7A, 7B présentent ainsi une forme sensiblement en L, mais dont les bras forment entre eux un angle obtus (supérieur à 90°), de préférence très ouvert.

Selon un mode alternatif de réalisation de l'invention, le moyen de manoeuvre comprend une biellette, dont l'une des extrémités est liée, par l'intermédiaire d'une liaison pivot, au moyen d'entraînement 5A, 5B, l'autre extrémité étant liée, par l'intermédiaire d'une autre liaison pivot, à la pièce intermédiaire 7. Un tel système de biellette est bien connu de l'homme du métier, notamment par la demande de brevet WO-96/01069 du même demandeur, à laquelle on pourra se référer pour une description plus complète.

Avantageusement, le moyen d'entraînement 5A, 5B est monté à coulissement élastique relativement au couvercle 2, de telle sorte que sa position de rappel élastique correspond au verrouillage de la au moins une mâchoire 4.

Dans le cas préféré où le moyen d'entraînement 5 est formé de deux bras entraîneurs 5A, 5B guidés en translation et montés en opposition, il est avantageux de relier les extrémités internes respectives desdits bras 5A, 5B par un moyen élastique de rappel (non visible aux figures), par exemple un ressort qui est agencé de façon à rappeler les bras entraîneurs 5A, 5B l'un vers l'autre, chacun dans une direction radiale centripète. Sous l'effet de cette force de rappel, les mâchoires 4, 4' sont ainsi maintenues en position stable de verrouillage.

Selon une variante préférentielle de l'invention, l'organe de commande principal 6 est couplé cinématiquement avec un organe de commande secondaire 8 monté mobile sur le couvercle 2 selon une direction sensiblement axiale, ledit organe de commande secondaire 8 étant apte à commander le déplacement du moyen d'entraînement 5 dans le sens du verrouillage. Pour réaliser ce couplage cinématique, l'organe de commande principal 6 et l'organe de commande secondaire 8 peuvent être chacun dotés de surfaces d'engagement 6A, 8A, conformées pour coopérer entre elles, par exemple par l'intermédiaire d'une interface de contact formée par un plan incliné, par exemple de 45° par rapport à l'axe de symétrie X-X'. Un tel couplage cinématique « *en coin* » transforme de manière classique le mouvement axial de l'organe de commande secondaire 8 en un mouvement radial centrifuge de déplacement de l'organe de commande principal 6. Dans une variante préférentielle de fonctionnement, l'organe de commande principal 6 peut être assimilé à un organe d'ouverture, son actionnement dans une direction radiale centripète induisant une rotation de la pièce intermédiaire 7 de façon à ce que celle-ci engage le moyen d'entraînement 5 pour provoquer son déplacement vers la position d'ouverture de la au moins une mâchoire 4. L'organe de commande secondaire 8 peut être quant à lui assimilé à un organe de fermeture, son déplacement axial repoussant l'organe de commande principal 6 dans une direction radiale centrifuge, ce dernier induisant concomitamment une rotation de la pièce intermédiaire 7 de façon à ce que celle-ci engage le moyen d'entraînement 5 pour provoquer son déplacement vers la position de fermeture de la au moins une mâchoire 4 hors de la position correspondant au déverrouillage jusqu'à la position de verrouillage.

Avantageusement, le dispositif de commande du mouvement des mâchoires 4 comporte un moyen de blocage réversible 9, 9', 9" du moyen d'entraînement 5 en position de déverrouillage. Le moyen de blocage réversible 9 permet ainsi d'obtenir une position de déverrouillage stable. Le moyen de blocage réversible 9, 9', 9" peut reposer par exemple sur un principe de cran ou de came-butée, la came étant solidaire de la pièce intermédiaire 7 tandis que la butée est fixe par rapport à cette pièce intermédiaire 7.

De manière préférentielle, l'organe de commande secondaire 8 comporte des moyens de relâchement 8A pour commander le désarmement des moyens de blocage réversibles 9, 9', 9". La fonction des moyens de relâchement peut être réalisée directement par le couplage cinématique entre l'organe de commande principal 6 et l'organe de commande secondaire 8. Ainsi, lorsqu'il est actionné, l'organe de commande secondaire 8 vient engager, avec sa surface d'engagement inclinée 8A, la surface d'engagement complémentaire 6A ménagée sur l'organe de commande principal 6, et l'effort ainsi exercé sur ce dernier est suffisant pour faire tourner la pièce intermédiaire 7 au point de libérer la came de la butée.

De façon particulièrement avantageuse, tel que cela est illustré à la figure 9, les lumières oblongues de manoeuvre formant moyen de manoeuvre sont conformées pour présenter chacune un coude 38, 39, lequel coude 38, 39 forme le moyen de blocage réversible 9, 9'. Chaque coude 38, 39 occasionne une aspérité 9, 9' respective formant butée susceptible de constituer un moyen de blocage réversible, du type cran, du moyen d'entraînement 5 en position de déverrouillage. En effet, sous l'action de la force de rappel du ressort liant les bras entraîneurs 5A, 5B, entre eux, les ergots de guidage 12A, 12B subissent une force centripète, qui en conjonction avec le décroché respectif formant aspérité 9, permet d'obtenir un blocage réversible de la pièce intermédiaire 7 dans une position stable de déverrouillage.

Le désarmement de cette position de déverrouillage est obtenu en exerçant une poussée sur le poussoir axial 8. La surface inclinée 8A, solidaire du poussoir axial 8, vient en effet pousser la surface complémentaire 6A liée au poussoir radial 6, la force exercée étant suffisante pour éloigner, par effet de « *coin* »*,* le poussoir radial 6 suffisamment au point que les ergots de guidage 12A, 12B passent au delà de l'aspérité respective 9, 9' et finissent ensuite leur course automatiquement, sous l'action conjointe du ressort de compression 33 qui rappelle la pièce intermédiaire 7 et du ressort de rappel des bras entraîneurs 5A, 5B, jusqu'au fond de l'extrémité opposée des lumières oblongues de manoeuvre 7A, 7B, pour atteindre une position de verrouillage stable, représentée à la figure 9. De façon préférentielle, le poussoir axial 8 est soumis à l'action d'un moyen élastique, par exemple un ressort axial de compression (non représenté) qui le maintient au repos en position haute, c'est-à-dire dans une position où la surface d'engagement 8A ne coopère pas avec la surface complémentaire 6A.

Le dispositif de commande du verrouillage / déverrouillage est ainsi préférentiellement un système à retour automatique en position de fermeture, sous l'action de l'utilisateur sur le poussoir axial formant gâchette.

Il est également possible, à titre de variante, tel que cela est représenté à la figure 5, que les lumières oblongues de manoeuvre 7A, 7B aient leurs extrémités correspondant à la position d'ouverture 17A, 17C évasées. Cet élargissement occasionne là encore un cran 9", apte à former une butée susceptible de constituer un moyen de blocage réversible.

Avantageusement, l'appareil de cuisson selon l'invention comprend un moyen de sécurité à la fermeture / ouverture 10 du genre doigt ou clapet. La position du moyen de sécurité 10 est sensible à la pression ou à la température régnant dans l'enceinte de cuisson. Le moyen de sécurité 10 est monté mobile entre deux positions stables de butée, une position basse dans laquelle ledit moyen de sécurité 10 met en communication l'intérieur de l'enceinte avec l'extérieur en deçà d'une pression interne P₀ prédéterminée, une position haute dans laquelle il ferme la communication de l'enceinte avec l'extérieur lorsque la pression P₀ est atteinte, pour permettre la montée en pression de l'appareil et la cuisson.

De tels moyens de sécurité à la fermeture / ouverture sont bien connus de l'homme du métier et permettent de s'assurer que le couvercle est bien en position de verrouillage stable sur la cuve, le moyen de sécurité ne pouvant se déplacer sous l'effet de la pression que si ladite position stable de verrouillage est effectivement atteinte.

Ceci permet d'éviter une montée en pression alors qu'une mauvaise position de verrouillage est atteinte. Inversement, le montage de tels moyens de sécurité à la fermeture / ouverture évite une ouverture de l'appareil inopinée, alors qu'une pression résiduelle demeure dans l'appareil, puisque seule la position basse du moyen de sécurité 10 permet l'ouverture de l'appareil. De façon préférentielle, le moyen de sécurité à l'ouverture / fermeture 10 est constitué par un système de tige manométrique, du genre doigt d'Aroma.

Avantageusement, tel que cela est représenté aux figures 3 et 5, la pièce intermédiaire 7 est conformée de façon à coopérer avec le moyen de sécurité 10 pour que ce dernier empêche la rotation libre de la pièce intermédiaire 7, et donc le déverrouillage du couvercle 2 lorsque le moyen de sécurité 10 est en position haute.

Avantageusement, la pièce intermédiaire 7 est également conformée pour empêcher le moyen de sécurité 10 d'atteindre sa position haute, lorsque la pièce intermédiaire 7 se trouve dans une position autre que celle correspondant au verrouillage du couvercle 2.

De façon préférentielle, tel que cela est représenté à la figure 3, le bord 7A de la pièce intermédiaire 7 qui est au voisinage du doigt de sécurité 10, présente une forme incurvée vers l'intérieur, qui s'apparente à une conformation concave, de façon à autoriser une course axiale libre du doigt de sécurité 10. Une fois le doigt 10 en position haute de butée, la pièce intermédiaire 7 ne sera plus libre en rotation, puisqu'elle sera bloquée par son propre bord 7A qui butera latéralement contre le doigt 10.

Dans le cas où la au moins une mâchoire 4 n'est pas en position de fermeture, la pièce intermédiaire 7 ne se trouve pas dans la configuration représentée à la figure 3, mais dans une position où le bord 7A surplombe en partie ou totalement le doigt de sécurité 10, de sorte que celui-ci ne peut effectuer de course axiale libre sans buter contre le bord 7A au dessus de lui. Ainsi, dans ce cas de figure, le doigt de sécurité 10 est incapable d'atteindre sa position haute de butée dans laquelle il ferme la communication de l'enceinte avec l'extérieur.

Ainsi, la montée en pression de l'appareil et la cuisson ne peuvent s'effectuer normalement lorsque la pièce intermédiaire 7 se trouve dans une position autre que celle représentée aux figures, et qui correspond au verrouillage de la au moins une mâchoire 4.

De façon particulièrement préférentielle, tel que cela est représenté à la figure 9, le bord 7A est conformé de façon à épouser intimement le demi-périmètre de la section du doigt de sécurité 10, ce qui permet une précision optimale du moyen de sécurité 10.

L'utilisation d'une pièce intermédiaire rotative 7 s'avère donc particulièrement intéressante puisqu'il suffit de bloquer cette pièce pour bloquer la au moins une mâchoire 4. La pièce intermédiaire 7 concourt donc à simplifier la conception de l'appareil notamment pour la mise en oeuvre du moyen de sécurité à l'ouverture / fermeture 10, et à fiabiliser le fonctionnement de ce dernier.

Avantageusement, l'organe de commande principal 6 est un poussoir d'ouverture apte à être commandé manuellement.

Avantageusement, l'organe de commande secondaire 8 est également un poussoir de fermeture apte à être commandé manuellement.

Selon un mode particulièrement avantageux de réalisation de l'invention, le couvercle 2 présente une face interne 2A tournée vers l'intérieur de l'enceinte de la cuisson et une face externe 2B opposée, sur laquelle est montée une platine 13 pourvue d'un axe de montage vertical 14 s'étendant sensiblement axialement, de préférence à partir du centre de la platine 13, vers l'extérieur du récipient de cuisson.

Autour de l'axe de montage vertical 14 est montée en rotation libre la plaque formant volant 7, dont les lumières oblongues de manoeuvre 7A, 7B définissent respectivement, en conjonction avec des lumières oblongues rectilignes correspondantes 13A, 13B ménagées radialement dans la platine 13, de part et d'autre du point de pivotement de la plaque 7, deux ouvertures d'engagement 15, 16 de chacun desdits ergots de guidage 12A, 12B. Chaque lumière oblongue de manoeuvre 7A, 7B est ainsi superposée au dessus de la lumière oblongue rectiligne correspondante 13A, 13B, de façon à ce que lorsque la plaque 7 tourne, les ouvertures d'engagement 15, 16 se déplacent chacune selon une direction radiale centrifuge ou centripète opposée, entre une position centripète correspondant au verrouillage (fermeture des mâchoires 4, 4') et une position centrifuge correspondant au déverrouillage (ouverture des mâchoires 4, 4'). De façon préférentielle, les ouvertures d'engagement 15, 16 sont sensiblement alignées avec le point de pivotement de la plaque 7.

Un tel agencement permet ainsi un interfaçage mécanique particulièrement simple et compact entre la platine 13 et le couvercle 2.

Les lumières oblongues de manoeuvre 7A, 7B traversent de préférence toute l'épaisseur de la plaque formant volant 7. Il est cependant envisageable, sans pour autant sortir du cadre de l'invention, de réaliser la fonction de pentes de guidage assurée par les lumières oblongues de manoeuvre 7A, 7B grâce à des rainures de même forme, non traversantes, ce qui peut s'avérer intéressant pour garantir l'étanchéité du mécanisme d'ouverture / fermeture.

La platine 13 est également pourvue du poussoir d'ouverture 6, lequel est de façon préférentielle guidé en translation radiale par un perçage oblong 6B, dont le mouvement est limité par l'axe de montage 14. Le poussoir radial 6 peut cependant être guidé par tout moyen connu de l'homme du métier, sans pour autant sortir du cadre de l'invention.

Les éléments susmentionnés dont est pourvue la platine 13 sont agencés de façon à ce qu'un déplacement radial du poussoir d'ouverture 6 induise une rotation de la plaque formant volant 7, laquelle rotation provoque un déplacement radial des ouvertures d'engagement 15, 16, lesquelles entraînent les ergots de guidage 12A, 12B, et donc les bras 5A, 5B et mâchoires 4, 4', jusqu'à la position de déverrouillage.

La présence d'une pièce intermédiaire 7 permet donc de transformer le mouvement de translation radiale de l'organe de commande principal 6 en mouvement des mâchoires 4, 4' selon une autre direction radiale quelconque. Les configurations représentées aux figures ne sont données qu'à titre d'exemple. La fonction de renvoi d'angle assurée par la plaque formant volant 7 est réalisable quelle que soit la direction de mobilité radiale de l'organe de commande principal 6 par rapport à celle des mâchoires 4, 4'.

Il est ainsi par exemple envisageable que la direction de mobilité de l'organe de commande principal 6 soit confondue avec la direction de mobilité des bras entraîneurs 5A, 5B et des mâchoires 4, 4'.

La pièce intermédiaire 7 permet également de procurer à l'utilisateur une réduction de l'effort à exercer sur l'organe de commande principal 6 pour déplacer les mâchoires 4, 4'. Dans le cas des variantes illustrées aux figures 3 et 9, cette démultiplication d'effort dépend notamment du rapport entre :
- d'une part la distance entre l'orifice oblong d'entraînement 6C et l'axe de montage 14,
- et d'autre part la distance entre les lumières oblongues de manoeuvre 7A, 7B et l'axe de montage 14.

Dans le cas des variantes illustrées aux figures 4 et 6, la démultiplication d'effort dépend également du nombre de dents de la crémaillère 18, de celui de la roue dentée 19, de celui du pignon 30, ainsi que de la nature du filetage de la vis 31 (pas, angle de filet notamment).

Le niveau de démultiplication peut donc être aisément ajusté par l'homme du métier en jouant sur les paramètres cités ci-avant, ainsi que sur le dimensionnement (longueur) des lumières de manoeuvre 7A, 7B et de l'orifice oblong d'entraînement 6C.

Avantageusement, la platine 13 est apte à être rapportée et fixée de façon amovible sur le couvercle 2.

De façon préférentielle, la platine 13 forme le siège 13C d'un module amovible de couvercle 20.

Avantageusement, le siège 13C est pourvu :
- d'une soupape de sécurité à la surpression 25,
- d'une soupape de régulation de pression 26, munie d'un système de tarage ajustable par l'utilisateur 27,
- d'un conduit de sortie de vapeur 28, débutant en aval de la soupape de régulation de pression 26 et au voisinage duquel est monté un capteur de température,
- d'un ensemble monobloc incluant un moyen de purge d'air intégré dans la tige manométrique 10.

Le module 20 comprend également un capot supérieur 40 qui coiffe le siège 13C et tous les éléments qui y sont montés et comprenant au moins :
- un logement de réception 29 d'un minuteur 30, lequel logement 29 est doté d'au moins un plot de connexion électrique relié fonctionnellement au capteur de température,
- le poussoir axial 8.

Le fonctionnement de l'appareil de cuisson conforme à l'invention est le suivant.

Sous l'action du ressort de rappel liant les bras entraîneurs 5A, 5B, les ergots verticaux de guidage 12A, 12B sont situés au repos dans une position stable correspondant à la fermeture des mâchoires 4, 4', c'est-à-dire qu'ils sont dans leur position la plus proche du centre du couvercle 2.

Sous l'effet du ressort de compression la liant au siège 13C du module 20, la plaque formant volant 7 est positionnée, au repos, dans une position correspondant à la fermeture des mâchoires 4, 4', et qui est telle que les ouvertures 15, 16 sont situées respectivement en regard des ergots axiaux de guidage 12A, 12B lorsque l'axe de symétrie X-X' et l'axe de montage 14 sont confondus.

Ainsi, lors de l'accostage du module 20 sur le couvercle 2, les ergots axiaux de guidage 12A, 12B pénètrent respectivement dans les ouvertures d'engagement 15, 16, réalisant ainsi la jonction dynamique entre les poussoirs de commande 6, 8 et les bras entraîneurs 5A, 5B et mâchoires 4, 4'.

La mise en place du couvercle 2 sur la cuve 1 nécessite l'ouverture des mâchoires 4, 4', qui est obtenu par l'actionnement radial centripète du poussoir radial d'ouverture 6. Le déplacement progressif du poussoir 6 permet de faire coulisser le pion 7C dans la lumière d'entraînement 6C, ce qui a pour effet de faire tourner la plaque formant volant 7 dans le sens horaire. La rotation de la plaque 7 provoque le coulissement des ergots de guidage 12A, 12B dans les lumières de manoeuvre 7A, 7B ménagées dans la plaque 7, le déplacement des ergots de guidage 12A, 12B étant limité par ailleurs latéralement par les lumières rectilignes 13A, 13B ménagées radialement dans le siège 13C du module 20. Les ergots 12A, 12B sont ainsi entraînés uniquement en translation radiale vers la périphérie de l'autocuiseur, selon une direction centrifuge. Les ergots 12A, 12B étant liés aux bras entraîneurs 5A, 5B, ces derniers coulissent radialement jusqu'à la position d'ouverture des mâchoires 4, 4'. Dans la position ainsi atteinte, les ergots de guidage 12A, 12B coopèrent à la façon d'une came avec une butée avec les coudes 38, 39 correspondants des lumières de manoeuvre 7A, 7B. Les mâchoires 4, 4' sont ainsi en position stable de déverrouillage et permettent ainsi un centrage du couvercle 2 sur le bord de la cuve 1.

La fermeture de l'enceinte de cuisson, c'est-à-dire l'atteinte par les mâchoires 4, 4' de leur position de verrouillage, est obtenue par pression de la paume de la main sur le bouton axial 8. Son enfoncement provoque un mouvement radial centrifuge du poussoir radial 6, par interaction entre les surfaces inclinées complémentaires 6A, 8A liées respectivement au poussoir axial 8 et au poussoir radial 6. Le déplacement centrifuge du poussoir radial 6 provoque, par la coopération du pion 7C et de la lumière d'entraînement 6C, une rotation de la plaque formant volant 7 dans le sens anti-horaire, de sorte que les ergots de guidage 12A, 12B sont libérés des moyens de blocage réversibles 9, 9', ce qui autorise sous l'action du ressort 33 de compression et du ressort de rappel des bras entraîneurs, le retour élastique de la plaque 7 et donc des mâchoires 4, 4' en position stable de verrouillage.

Selon les autres modes de réalisation montrés aux figures 4 et 6, l'entraînement par le poussoir radial 6 de la plaque de démultiplication 7 se fait par l'intermédiaire d'une roue dentée 19. Dans ce cas de figure, le déplacement radial du poussoir axial provoque la rotation de la roue dentée 19 laquelle entraîne la plaque formant volant 7. Il est tout à fait envisageable de prévoir une liaison autre qu'un encastrement entre la roue dentée 19 et la plaque formant volant 7, et par exemple interposer entre la roue dentée 19 et la plaque formant volant 7 un système de pignons visant à optimiser encore la cinématique d'ouverture / fermeture.

Ainsi, l'autocuiseur selon l'invention permet de bénéficier d'un dispositif de commande d'ouverture / fermeture particulièrement compact et ergonomique, puisqu'il peut être actionné avec une main seulement, du fait :
- qu'il met en jeu une translation,
- qu'il procure une réduction d'effort,
tout en bénéficiant des avantages d'une transmission intermédiaire rotative, en terme de compacité et simplicité de conception, par exemple pour intégrer une tige manométrique de sécurité.

## Revendications

1. Appareil de cuisson d'aliments sous pression comportant au moins :
- une cuve (1) et un couvercle (2) destiné à être rapporté et verrouillé sur ladite cuve (1) pour former une enceinte de cuisson étanche,
- une ou plusieurs mâchoire(s) (4) montée(s) mobile(s) en translation par un moyen d'entraînement (5) correspondant, entre une position de verrouillage du couvercle (2) relativement à la cuve (1) et une position de déverrouillage,
- un dispositif de commande (6, 7, 8) du mouvement de la au moins une mâchoire (4), comprenant :
• une pièce intermédiaire (7), laquelle comprend au moins un moyen de manoeuvre (7A, 7B) et un moyen d'embrayage (7C, 19), et est montée en rotation libre relativement au moyen d'entraînement (5) pour que le moyen de manoeuvre (7A, 7B) coopère avec ledit moyen d'entraînement (5) de façon à régir le déplacement de ce dernier,
• un organe de commande principal (6) comprenant au moins un moyen de transmission (6C, 18, 30, 31), ledit organe de commande principal (6) étant positionné relativement à la pièce intermédiaire (7) pour que le moyen de transmission (6C, 18, 30, 31) coopère avec le moyen d'embrayage (7C, 19), de façon à régir la rotation de la pièce intermédiaire (7) lorsque l'organe de commande principal (6) est actionné,
**caractérisé en ce que** l'organe de commande principal (6) est monté mobile en translation relativement au couvercle (2).

2. Appareil de cuisson selon la revendication 1 **caractérisé en ce que** l'organe de commande principal (6) est monté mobile selon une direction sensiblement radiale.

3. Appareil de cuisson d'aliments selon la revendication 1 ou 2 **caractérisé en ce que** la au moins une mâchoire (4) est montée mobile selon une direction sensiblement radiale.

4. Appareil de cuisson selon l'une des revendications 1 à 3 **caractérisé en ce que** l'organe de commande principal (6) régit la rotation de la pièce intermédiaire (7) de manière active dans le sens du verrouillage et dans le sens du déverrouillage.

5. Appareil de cuisson selon l'une des revendications 1 à 4 **caractérisé en ce que** le moyen d'embrayage est constitué par une roue dentée (19) montée axialement fixe sur la pièce intermédiaire (7).

6. Appareil de cuisson selon la revendication 5 **caractérisé en ce que** le moyen de transmission est constitué par une crémaillère (18) agencée sur l'organe de commande principal (6) pour engrener latéralement avec la roue dentée (19).

7. Appareil de cuisson selon la revendication 5 **caractérisé en ce que** le moyen de transmission est constitué d'une vis sans fin (31) montée fixe sur l'organe principal de commande (6) et s'étendant dans la direction de translation de ce dernier, ainsi que d'un pignon (30) monté fixe par rapport au couvercle (2) et engrenant perpendiculairement avec la roue dentée (19), ledit pignon (30) comprenant en son centre un trou taraudé coopérant avec la vis sans fin (31) pour qu'un mouvement de translation de celle-ci provoque la rotation du pignon (30).

8. Appareil de cuisson selon l'une des revendications 1 à 4 **caractérisé en ce que** le moyen d'embrayage est constitué par un pion de guidage (7C) s'étendant axialement à partir de la pièce intermédiaire (7).

9. Appareil de cuisson selon la revendication 8 **caractérisé en ce que** le moyen de transmission comprend au moins une surface plane (32) s'étendant en oblique par rapport à la direction radiale, et agencé de façon à ce qu'une translation de l'organe de commande principal (6) induise l'engagement du pion de guidage (7C) par la surface plane (32), laquelle pousse le pion de guidage (7C), ce qui engendre la rotation de la pièce intermédiaire (7).

10. Appareil de cuisson selon la revendication 8 **caractérisé en ce que** le moyen de transmission est constitué par un orifice oblong d'entraînement (6C) s'étendant en oblique par rapport à la direction radiale et coopérant avec le pion de guidage (7C), de façon à ce qu'une translation de l'organe de commande (6) induise une rotation de la pièce intermédiaire (7).

11. Appareil de cuisson selon l'une des revendications 1 à 10 **caractérisé en ce que** la pièce intermédiaire (7) est montée à rotation élastique relativement au couvercle (2), de telle sorte que sa position de rappel élastique correspond au verrouillage de la au moins une mâchoire (4, 4').

12. Appareil de cuisson selon la revendication 11 **caractérisé en ce que** la pièce intermédiaire (7) est montée à rotation élastique à l'encontre d'un ressort de compression (33).

13. Appareil de cuisson selon l'une des revendications 1 à 12 **caractérisé en ce que** le moyen d'entraînement (5) comprend au moins un bras entraîneur (5A, 5B) guidé en translation relativement au couvercle (2) et présentant une extrémité externe (24, 25) reliée à la au moins une mâchoire respective (4, 4') et une extrémité interne (22, 23) destinée à coopérer avec le moyen de manoeuvre (7A, 7B).

14. Appareil de cuisson selon la revendication 13 **caractérisé en ce que** l'extrémité interne (22, 23) est pourvue d'un ergot axial de guidage (12A, 12B).

15. Appareil de cuisson selon la revendication 14 **caractérisé en ce que** le moyen de manoeuvre (7A, 7B) comprend au moins une surface formant rampe (34, 35) s'étendant en oblique par rapport à la direction radiale, et étant agencée de façon à ce que lorsque la pièce intermédiaire (7) tourne, la surface formant rampe (34, 35) engage l'ergot axial de guidage correspondant (12A, 12B) et le pousse, ce qui engendre le mouvement du moyen d'entraînement (5A, 5B).

16. Appareil de cuisson selon la revendication 14 **caractérisé en ce que** le moyen de manoeuvre (7A, 7B) comprend au moins une lumière oblongue de manoeuvre (7A, 7B) agencée dans l'épaisseur de la pièce intermédiaire (7) pour engager l'ergot axial de guidage correspondant (12A, 12B), de façon à ce qu'une rotation de la pièce intermédiaire (7) engendre le mouvement du moyen d'entraînement (5A, 5B).

17. Appareil de cuisson selon la revendication 16 **caractérisé en ce que** la pièce intermédiaire (7) est une plaque formant volant qui comporte des oreilles (36, 37) appariées au nombre de mâchoires (4, 4'), et dans lesquelles sont pratiquées les lumières oblongues de manoeuvre (7A, 7B).

18. Appareil de cuisson selon l'une des revendications 1 à 14 **caractérisé en ce que** le moyen de manoeuvre (7A, 7B) comprend une biellette dont l'une des extrémités est liée au moyen d'entraînement (5), l'autre étant liée à la pièce intermédiaire (7).

19. Appareil de cuisson selon l'une des revendications 1 à 18 **caractérisé en ce que** le moyen d'entraînement (5) est monté à coulissement élastique relativement au couvercle (2), de telle sorte que sa position de rappel élastique correspond au verrouillage de la au moins une mâchoire (4, 4').

20. Appareil de cuisson selon l'une des revendications 1 à 19 **caractérisé en ce que** l'organe de commande principal (6) est couplé cinématiquement avec un organe de commande secondaire (8) monté mobile sur le couvercle selon une direction sensiblement axiale, ledit organe de commande secondaire (8) étant apte à commander le déplacement du moyen d'entraînement (5A, 5B) dans le sens du verrouillage.

21. Appareil de cuisson selon la revendication 20 **caractérisé en ce que** le dispositif de commande du mouvement des mâchoires (6, 7, 8) comporte un moyen de blocage réversible (9, 9', 9") du moyen d'entraînement (5A, 5B) en position de déverrouillage, l'organe de commande secondaire (8) comportant des moyens de relâchement (8A) pour commander le désarmement des moyens de blocage réversible (9, 9', 9").

22. Appareil de cuisson selon les revendications 16 ou 17, et 21 **caractérisé en ce que** les lumières oblongues de manoeuvre (7A, 7B) sont conformées pour présenter chacune un coude (38, 39), qui forme le moyen de blocage réversible (9, 9').

23. Appareil de cuisson selon l'une des revendications 1 à 22 **caractérisé en ce qu'**il comprend un moyen de sécurité à la fermeture / ouverture (10) dont la position est sensible à la pression ou à la température régnant dans l'enceinte de cuisson, ledit moyen de sécurité (10) étant monté mobile entre deux positions stables de butée, une position basse dans laquelle ledit moyen de sécurité met en communication l'intérieur de l'enceinte avec l'extérieur en-deçà d'une pression interne P₀ prédéterminée, une position haute dans laquelle il ferme la communication de l'enceinte avec l'extérieur lorsque la pression P₀ est atteinte, pour permettre la montée en pression de l'appareil et la cuisson.

24. Appareil de cuisson selon la revendication 23 **caractérisé en ce que** le moyen de sécurité à la fermeture / ouverture (10) est une tige manométrique.

25. Appareil selon la revendication 23 ou 24 **caractérisé en ce que** la pièce intermédiaire (7) est conformée de façon à coopérer avec le moyen de sécurité pour que ce dernier empêche la rotation libre de la pièce intermédiaire (7), et donc le déverrouillage du couvercle (2) lorsque le moyen de sécurité est en position haute, ladite pièce intermédiaire (7) étant également conformée pour empêcher le moyen de sécurité (10) d'atteindre sa position haute, lorsque la pièce intermédiaire (7) se trouve dans une position autre que celle correspondant au verrouillage du couvercle (2).

26. Appareil de cuisson selon l'une des revendications 1 à 25 **caractérisé en ce que** l'organe de commande principal (6) est un poussoir d'ouverture apte à être commandé manuellement.

27. Appareil de cuisson selon l'une des revendications 1 à 26 **caractérisé en ce que** l'organe de commande secondaire (8) est un poussoir de fermeture apte à être commandé manuellement.

28. Appareil de cuisson selon les revendications 2 et 19 **caractérisé en ce que** le couvercle (2) présente une face interne (2A) tournée vers l'intérieur de l'enceinte de cuisson et une face externe (2B) opposée, sur laquelle est montée une platine (13) pourvue :
- d'un axe de montage vertical (14) autour duquel est monté en rotation libre la plaque formant volant (7), dont les lumières oblongues de manoeuvre (7A, 7B) définissent respectivement en conjonction avec des lumières oblongues rectilignes (13A, 13B) correspondantes ménagées radialement dans la platine (13), deux ouvertures d'engagement (15, 16) de chacun desdits ergots de guidage (12A, 12B),
- du poussoir d'ouverture (6),
agencés de façon à ce qu'un déplacement radial du poussoir d'ouverture (6) induise une rotation de la plaque formant volant (7), laquelle rotation provoque un déplacement radial des ouvertures d'engagement (15, 16), lesquelles entraînent les ergots de guidage (12A, 12B) et donc les bras (5A, 5B) et mâchoires (4, 4') jusqu'à la position de déverrouillage.

29. Appareil de cuisson selon la revendication 28 **caractérisé en ce que** la platine (13) est apte à être rapporté et fixé de façon amovible sur le couvercle (2).

## Patentansprüche

1. Dampfdruckkochgerät, mindestens umfassend:
- einen Behälter (1) und einen Deckel (2), der dazu bestimmt ist, auf den Behälter (1) aufgesetzt und auf diesem verriegelt zu werden, um einen dichten Kochraum zu bilden,
- eine oder mehrere Klemmbacke(n) (4), die in Translation beweglich durch ein entsprechendes Antriebsmittel (5) zwischen einer Verriegelungsposition des Deckels (2) in Bezug zum Behälter (1) und einer Entriegelungsposition montiert ist (sind),
- eine Steuervorrichtung (6, 7, 8) für die Bewegung der mindestens einen Klemmbacke (4), umfassend:
* ein Zwischenstück (7), das mindestens ein Betätigungsmittel (7A, 7B) und ein Kupplungsmittel (7C, 19) umfasst und frei drehbar in Bezug zum Antriebsmittel (5) montiert ist, damit das Betätigungsmittel (7A, 7B) mit dem Antriebsmittel (5) zusammenwirkt, um die Verschiebung dieses letztgenannten zu steuern,
* ein Hauptsteuerelement (6), umfassend mindestens ein Übertragungsmittel (6C, 18, 30, 31), wobei das Hauptsteuerelement (6) in Bezug zum Zwischenstück (7) derart positioniert ist, dass das Übertragungsmittel (6C, 18, 30, 31) mit dem Kupplungsmittel (7C, 19) derart zusammenwirkt, dass es die Drehung des Zwischenstücks (7) steuert, wenn das Hauptsteuerelement (6) betätigt wird,
**dadurch gekennzeichnet, dass** das Hauptsteuerelement (6) in Bezug zum Deckel (2) in Translation beweglich montiert ist.

2. Kochgerät nach Anspruch 1, **dadurch gekennzeichnet, dass** das Hauptsteuerelement (6) in eine im Wesentlichen radiale Richtung beweglich montiert ist.

3. Kochgerät nach Anspruch 1 oder 2, **dadurch gekennzeichnet, dass** die mindestens eine Klemmbacke (4) in eine im Wesentlichen radiale Richtung beweglich montiert ist.

4. Kochgerät nach einem der Ansprüche 1 bis 3, **dadurch gekennzeichnet, dass** das Hauptsteuerelement (6) die Drehung des Zwischenstücks (7) aktiv in die Richtung des Verriegelns und in die Richtung des Entriegelns steuert.

5. Kochgerät nach einem der Ansprüche 1 bis 4, **dadurch gekennzeichnet, dass** das Kupplungsmittel von einem Zahnrad (19) gebildet ist, das axial fest auf dem Zwischenstück (7) montiert ist.

6. Kochgerät nach Anspruch 5, **dadurch gekennzeichnet, dass** das Übertragungsmittel von einer Zahnstange (18) gebildet ist, die auf dem Hauptsteuerelement (6) angeordnet ist, um seitlich in das Zahnrad (19) einzugreifen.

7. Kochgerät nach Anspruch 5, **dadurch gekennzeichnet, dass** das Übertragungsmittel aus einem Gewinde (31), dass fest auf dem Hauptsteuerelement (6) montiert ist und sich in die Translationsrichtung dieses letztgenannten erstreckt, sowie aus einem Ritzel (30) gebildet ist, das fest in Bezug zum Deckel (2) montiert ist und senkrecht in das Zahnrad (19) eingreift, wobei das Ritzel (30) in seiner Mitte ein Gewindeloch umfasst, das mit dem Gewinde (31) zusammenwirkt, damit eine Translationsbewegung derselben die Drehung des Ritzels (30) hervorruft.

8. Kochgerät nach einem der Ansprüche 1 bis 4, **dadurch gekennzeichnet, dass** das Kupplungsmittel von einem Führungsstift (7C) gebildet ist, der sich axial vom Zwischenstück (7) ausgehend erstreckt.

9. Kochgerät nach Anspruch 8, **dadurch gekennzeichnet, dass** das Übertragungsmittel mindestens eine ebene Fläche (32) umfasst, die sich schräg zur Radialrichtung erstreckt und derart angeordnet ist, dass eine Translation des Hauptsteuerelements (6) zum Eingreifen des Führungsstiftes (7C) über die ebene Fläche (32) führt, die den Führungsstift (7C) schiebt, was zur Drehung des Zwischenstücks (7) führt.

10. Kochgerät nach Anspruch 8, **dadurch gekennzeichnet, dass** das Übertragungsmittel von einer länglichen Antriebsöffnung (6C) gebildet ist, die sich schräg zur Radialrichtung erstreckt und mit dem Führungsstift (7C) zusammenwirkt, so dass eine Translation des Steuerelements (6) zu einer Drehung des Zwischenstücks (7) führt.

11. Kochgerät nach einem der Ansprüche 1 bis 10, **dadurch gekennzeichnet, dass** das Zwischenstück (7) elastisch drehbar in Bezug zum Deckel (2) montiert ist, so dass seine elastische Rückstellposition der Verriegelung der mindestens einen Klemmbacke (4, 4') entspricht.

12. Kochgerät nach Anspruch 11, **dadurch gekennzeichnet, dass** das Zwischenstück (7) elastisch drehbar gegen eine Kompressionsfeder (33) montiert ist.

13. Kochgerät nach einem der Ansprüche 1 bis 12, **dadurch gekennzeichnet, dass** das Antriebsmittel (5) mindestens einen Antriebsarm (5A, 5B) umfasst, der in Translation in Bezug zum Deckel (2) geführt wird und ein äußeres Ende (24, 25), das mit der mindestens einen jeweiligen Klemmbacke (4, 4') verbunden ist, und ein inneres Ende (22, 23) aufweist, das dazu bestimmt ist, mit dem Betätigungsmittel (7A, 7B) zusammenzuwirken.

14. Kochgerät nach Anspruch 13, **dadurch gekennzeichnet, dass** das innere Ende (22, 23) mit einem axialen Führungshaken (12A, 12B) versehen ist.

15. Kochgerät nach Anspruch 14, **dadurch gekennzeichnet, dass** das Betätigungsmittel (7A, 7B) mindestens eine Fläche umfasst, die eine Rampe (34, 35) bildet, die sich schräg zur Radialrichtung erstreckt und derart angeordnet ist, dass, wenn sich das Zwischenstück (7) dreht, die die Rampe (34, 35) bildende Fläche den entsprechenden axialen Führungshaken (12A, 12B) aufnimmt und ihn schiebt, was zur Bewegung des Antriebsmittels (5A, 5B) führt.

16. Kochgerät nach Anspruch 14, **dadurch gekennzeichnet, dass** das Betätigungsmittel (7A, 7B) mindestens eine längliche Betätigungsöffnung (7A, 7B) umfasst, die in der Dicke des Zwischenstücks (7) angeordnet ist, um den entsprechenden axialen Führungshaken (12A, 12B) aufzunehmen, damit eine Drehung des Zwischenstücks (7) zur Bewegung des Antriebsmittels (5A, 5B) führt.

17. Kochgerät nach Anspruch 16, **dadurch gekennzeichnet, dass** das Zwischenstück (7) eine Klappe bildende Platte ist, die Ösen (36, 37) umfasst, die in der gleichen Anzahl wie die Klemmbacken (4, 4') vorhanden sind und in denen die länglichen Betätigungsöffnungen (7A, 7B) vorgesehen sind.

18. Kochgerät nach einem der Ansprüche 1 bis 14, **dadurch gekennzeichnet, dass** das Betätigungsmittel (7A, 7B) einen Schwingarm umfasst, bei dem eines der Enden mit dem Antriebsmittel (5), das andere mit dem Zwischenstück (7) verbunden ist.

19. Kochgerät nach einem der Ansprüche 1 bis 18, **dadurch gekennzeichnet, dass** das Antriebsmittel (5) elastisch in Bezug zum Deckel (2) gleitend montiert ist, so dass seine elastische Rückstellposition der Verriegelung der mindestens einen Klemmbacke (4, 4') entspricht.

20. Kochgerät nach einem der Ansprüche 1 bis 19, **dadurch gekennzeichnet, dass** das Hauptsteuerelement (6) kinematisch mit einem Nebensteuerelement (8) gekoppelt ist, das auf dem Deckel in eine im Wesentlichen axiale Richtung beweglich montiert ist, wobei das Nebensteuerelement (8) geeignet ist, die Verschiebung des Antriebsmittels (5A, 5B) in Verriegelungsrichtung zu steuern.

21. Kochgerät nach Anspruch 20, **dadurch gekennzeichnet, dass** die Steuervorrichtung für die Bewegung der Klemmbacken (6, 7, 8) ein umkehrbares Feststellmittel (9, 9', 9") für das Antriebsmittel (5A, 5B) in Entriegelungsposition umfasst, wobei das Nebensteuermittel (8) Lockerungsmittel (8A) umfasst, um die Freigabe der umkehrbaren Feststellmittel (9, 9', 9") zu steuern.

22. Kochgerät nach den Ansprüchen 16 oder 17 und 21, **dadurch gekennzeichnet, dass** die länglichen Betätigungsöffnungen (7A, 7B) derart ausgebildet sind, dass sie jeweils einen Knick (38, 39) aufweisen, der das umkehrbare Feststellmittel (9, 9') bildet.

23. Kochgerät nach einem der Ansprüche 1 bis 22, **dadurch gekennzeichnet, dass** es ein Sicherheitsmittel für das Schließen/Öffnen (10) umfasst, dessen Position für den Druck oder die Temperatur, die in dem Kochraum herrschen, empfindlich ist, wobei das Sicherheitsmittel (10) zwischen zwei stabilen Anschlagpositionen beweglich montiert ist, einer unteren Position, in der das Sicherheitsmittel das Innere des Raums mit dem Außenbereich unter einem vorbestimmten Innendruck P₀ in Verbindung bringt, einer oberen Position, in der es die Verbindung des Raums mit dem Außenbereich schließt, wenn der Druck P₀ erreicht ist, um den Druckanstieg des Geräts und das Kochen zu ermöglichen.

24. Kochgerät nach Anspruch 23, **dadurch gekennzeichnet, dass** das Sicherheitsmittel für das Schließen/Öffnen (10) eine Manometerstange ist.

25. Gerät nach Anspruch 23 oder 24, **dadurch gekennzeichnet, dass** das Zwischenstück (7) derart ausgebildet ist, dass es mit dem Sicherheitsmittel zusammenwirkt, damit dieses letztgenannte die freie Drehung des Zwischenstücks (7) und somit die Entriegelung des Deckels (2) verhindert, wenn das Sicherheitsmittel in der oberen Position ist, wobei das Zwischenstück (7) auch derart ausgebildet ist, dass es das Sicherheitsmittel (10) daran hindert, dass es seine obere Position erreicht, wenn sich das Zwischenstück (7) in einer anderen Position als der der Verriegelung des Deckels (2) entsprechenden befindet.

26. Kochgerät nach einem der Ansprüche 1 bis 25, **dadurch gekennzeichnet, dass** das Hauptsteuerelement (6) ein Öffnungsschieber ist, der manuell gesteuert werden kann.

27. Kochgerät nach einem der Ansprüche 1 bis 26, **dadurch gekennzeichnet, dass** das Nebensteuerelement (8) ein Verschlussschieber ist, der manuell gesteuert werden kann.

28. Kochgerät nach den Ansprüchen 2 und 19, **dadurch gekennzeichnet, dass** der Deckel (2) eine Innenseite (2A), die zum Inneren des Kochraums gewandt ist, und eine gegenüberliegende Außenseite (2B) aufweist, auf der eine Platte (13) montiert ist, die mit Folgendem versehen ist:
- einer vertikalen Montageachse (14), um die frei drehbar die die Klappe (7) bildende Platte montiert ist, deren längliche Betätigungsöffnungen (7A, 7B) jeweils in Verbindung mit entsprechenden geraden länglichen Öffnungen (13A, 13B), die radial in der Platte (13) vorgesehen sind, zwei Eingriffsöffnungen (15, 16) für jeden der Führungshaken (12A, 12B) definieren,
- dem Öffnungsschieber (6),
derart angeordnet, dass eine radiale Verschiebung des Öffnungsschiebers (6) zu einer Drehung der die Klappe (7) bildenden Platte führt, wobei die Drehung zu einer Radialverschiebung der Eingriffsöffnungen (15, 16) führt, die die Führungshaken (12A, 12B) und somit die Arme (5A, 5B) und Klemmbacken (4, 4') in die Entriegelungsposition mitnehmen.

29. Kochgerät nach Anspruch 28, **dadurch gekennzeichnet, dass** die Platte (13) geeignet ist, auf den Deckel (2) aufgesetzt und auf diesem abnehmbar befestigt zu werden.

## Claims

1. An appliance for cooking food under pressure, the appliance comprising at least:
- a a vessel (1) and a lid (2) for being fitted to and locked on said vessel (1) in order to form a leaktight cooking enclosure;
- one or more jaws (4) mounted to move in translation by corresponding drive means (5) between a position in which the lid (2) is locked relative to the vessel (1), and an unlocking position; and
- a control device (6, 7, 8) for controlling the movement of the at least one jaw (4), the control device comprising:
* an intermediate part (7) comprising at least one maneuvering means (7A, 7B) and at least one clutch means (7C, 19), and mounted to turn freely relative to the drive means (5) so that the maneuvering means (7A, 7B) co-operates with said drive means (5) so as to control the displacement thereof; and
* a main control member (6) comprising at least one transmission means (6C, 18, 30, 31), said main control member (6) being positioned relative to the intermediate part (7) so that the transmission means (6C, 18, 30, 31) co-operates with the clutch means (7C, 19) so as to control turning of the intermediate part (7) when the main control member (6) is actuated,
the appliance being **characterized in that** the main control member (6) is mounted to move in translation relative to the lid (2).

2. A cooking appliance according to claim 1, **characterized in that** the main control member (6) is mounted to move in a direction that is substantially radial.

3. An appliance for cooking food according to claim 1 or claim 2, **characterized in that** the at least one jaw (4) is mounted to move in a direction that is substantially radial.

4. A cooking appliance according to any one of claims 1 to 3, **characterized in that** the main control member (6) controls rotation of the intermediate part (7) in a manner that is active in the locking direction and in the unlocking direction.

5. A cooking appliance according to any one of claims 1 to 4, **characterized in that** the clutch means is constituted by a pinion (19) mounted to be axially stationary on the intermediate part (7).

6. A cooking appliance according to claim 5, **characterized in that** the transmission means is constituted by a rack (18) arranged on the main control member (6) to mesh laterally with the pinion (19).

7. A cooking appliance according to claim 5, **characterized in that** the transmission means is constituted by a worm screw (31) mounted stationary on the main control member (6) and extending in the translation direction thereof, together with a gearwheel (30) mounted stationary relative to the lid (2) and meshing perpendicularly with the pinion (19), said gearwheel (30) having a central tapped hole co-operating with the worm screw (31) so that movement in translation thereof causes the gearwheel (30) to move in rotation.

8. A cooking appliance according to any one of claims 1 to 4, **characterized in that** the clutch means is constituted by a guide peg (7C) extending axially from the intermediate part (7).

9. A cooking appliance according to claim 8, **characterized in that** the transmission means include at least one plane surface (32) extending obliquely relative to the radial direction, and arranged in such a manner that movement in translation of the main control member (6) causes the guide peg (7C) to be engaged by the plane surface (32), which pushes against the guide peg (7C), thereby causing the intermediate part (7) to turn.

10. A cooking appliance according to claim 8, **characterized in that** the transmission means is constituted by an oblong drive orifice (6C) extending obliquely relative to the radial direction and co-operating with the guide peg (7C) in such a manner that a movement in translation of the control member (6) leads to a movement in rotation of the intermediate part (7).

11. A cooking appliance according to any one of claims 1 to 10, **characterized in that** the intermediate part (7) is mounted to turn resiliently relative to the lid (2) in such a manner that its resilient return position corresponds to at least one jaw (4, 4') being locked.

12. A cooking appliance according to claim 11, **characterized in that** the intermediate part (7) is mounted to turn resiliently against a compression spring (33).

13. A cooking appliance according to any one of claims 1 to 12, **characterized in that** the drive means (5) includes at least one drive arm (5A, 5B) guided to move in translation relative to the lid (2), and presenting an outer end (24, 25) connected to the at least one respective jaw (4, 4') and an inner end (22, 23) for co-operating with the maneuvering means (7A, 7B).

14. A cooking appliance according to claim 13, **characterized in that** the inner end (22, 23) is provided with an axial guide stud (12A, 12B).

15. A cooking appliance according to claim 14, **characterized in that** the maneuvering means (7A, 7B) comprises at least one ramp-forming surface (34, 35) extending obliquely relative to the radial direction, and arranged in such a manner that when the intermediate part (7) turns, the ramp-forming surface (34, 35) engages the corresponding axial guide stud (12A, 12B) and pushes it, thereby causing the drive means (5A, 5B) to move.

16. A cooking appliance according to claim 14, **characterized in that** the maneuvering means (7A, 7B) comprise at least one oblong maneuvering slot (7A, 7B) arranged in the thickness of the intermediate part (7) to engage the corresponding axial guide stud (12A, 12B) in such a manner that turning the intermediate part (7) causes the drive means (5A, 5B) to move.

17. A cooking appliance according to claim 16, **characterized in that** the intermediate part (7) is a control-wheel-forming plate having as many lugs (36, 37) as there are jaws (4, 4'), and in which the oblong maneuvering slots (7A, 7B) are formed.

18. A cooking appliance according to any one of claims 1 to 14, **characterized in that** the maneuvering means (7A, 7B) comprise a link having one of its ends connected to the drive means (5) and having its other end connected to the intermediate part (7).

19. A cooking appliance according to any one of claims 1 to 18, **characterized in that** the drive means (5) is mounted to slide resiliently relative to the lid (2) in such a manner that its resilient return position corresponds to the at least one jaw (4, 4') being locked.

20. A cooking appliance according to any one of claims 1 to 19, **characterized in that** the main control member (6) is dynamically coupled with a secondary control member (8) mounted to move on the lid in a substantially axial direction, said secondary control member (8) being suitable for causing the drive means (5A, 5B) to move in the locking direction.

21. A cooking appliance according to claim 20, **characterized in that** the device (6, 7, 8) for controlling movement of the jaws includes reversible blocking means (9, 9', 9") for locking the drive means (5A, 5B) in the unlocking position, the secondary control member (8) including release means (8A) for causing the reversible blocking means (9, 9', 9") to be released.

22. A cooking appliance according to claim 16 or claim 17, and claim 21, **characterized in that** the oblong maneuvering slots (7A, 7B) are shaped so that each of the presents a bend (38, 39) which forms the reversible blocking means (9, 9').

23. A cooking appliance according to any one of claims 1 to 22, **characterized in that** it includes closure/opening safety means (10) of position that is sensitive to the pressure or the temperature that exists inside the cooking enclosure, said safety means (10) being mounted to move between two stable abutment positions, a low abutment position in which said safety means puts the inside of the enclosure into communication with the outside below a predetermined internal pressure P₀, and a high position in which it closes off communication between the enclosure and the outside when the pressure P₀ is reached, so as to allow the pressure inside the appliance to rise for cooking purposes.

24. A cooking appliance according to claim 23, **characterized in that** the closure/opening safety means (10) is a pressure-measuring rod.

25. A cooking appliance according to claim 23 or claim 24, **characterized in that** the intermediate part (7) is shaped in such a manner as to co-operate with the safety means so that the safety means prevent the intermediate part (7) from turning freely, and thus prevents the lid (2) from unlocking so long as the safety means is in the high position, said intermediate part (7) also being shaped so as to prevent the safety means (10) from reaching the high position so long as the intermediate part (7) is in a position other than that corresponding to the lid (2) being locked.

26. A cooking appliance according to any one of claims 1 to 25, **characterized in that** the main control member (6) is an opening pusher suitable for being controlled by hand.

27. A cooking appliance according to any one of claims 1 to 26, **characterized in that** the secondary control member (8) is a closure pusher suitable for being controlled by hand.

28. A cooking appliance according to claims 2 and 19, **characterized in that** the lid (2) presents an inside face (2A) facing towards the inside of the cooking enclosure and an opposite, outside face (2B) having mounted thereon a mechanism plate (13) provided with:
- a vertical assembly pin (14) about which the control-wheel-forming plate (7) is mounted to turn freely, the oblong maneuvering slots (7A, 7B) thereof co-operating with respective corresponding rectilinear oblong slots (13A, 13B) formed radially in the mechanism plate (13) to define two engagement openings (15, 16) for each of said guide studs (12A, 12B), respectively;
- and the opening pusher (6);
arranged in such a manner that radial displacement of the opening pusher (6) leads to turning of the control-wheel-forming plate (7), where such turning causes the engagement openings (15, 16) to move radially, thereby entraining the guide studs (12A, 12B), and thus the arms (5A, 5B) and the jaws (4, 4') to the unlocking position.

29. A cooking appliance according to claim 28, **characterized in that** the mechanism plate (13) is suitable for being fitted and releasably secured to the lid (2).
